# EUROPEAN PATENT SPECIFICATION

(11) **EP 4 468 260 B1**
(45) Date of publication and mention of the grant of the patent: **15.07.2026**
(21) Application number: 23305840.3
(22) Date of filing: 26.05.2023
(51) Int. Cl.: G06V 30/18, G06V 30/184, G06V 30/244, G06V 30/28, G06V 30/32, G06V 10/82

(54) **RECOGNIZING HANDWRITTEN INPUT**
ERKENNUNG HANDGESCHRIEBENER EINGABEN
RECONNAISSANCE D'ENTRÉE MANUSCRITE

(43) Date of publication of application: 27.11.2024
(73) Proprietor: MyScript, 44339 Nantes Cedex 3 (FR)
(72) Inventor: Cerovic, Cyril, 44339 NANTES (FR)
(74) Representative: RVDB Nantes

(56) References cited:
- EP-A1- 3 910 534
- GRAVES A ET AL: "A Novel Connectionist System for Unconstrained Handwriting Recognition", IEEE TRANSACTIONS ON PATTERN ANALYSIS AND MACHINE INTELLIGENCE, IEEE COMPUTER SOCIETY, USA, vol. 30, no. 5, 1 May 2009 (2009-05-01), pages 855 - 868, XP011247312, ISSN: 0162-8828
- SAFARZADEH VAHID MOHAMMADI ET AL: "Offline Persian Handwriting Recognition with CNN and RNN-CTC", 2020 25TH INTERNATIONAL COMPUTER CONFERENCE, COMPUTER SOCIETY OF IRAN (CSICC), IEEE, 1 January 2020 (2020-01-01), pages 1 - 10, XP033751592, [retrieved on 20200327], DOI: 10.1109/CSICC49403.2020.9050073

## Description

### Field of the invention

The present invention relates to the field of methods and computing devices for processing handwriting and is concerned in particular with recognizing logographic handwritten characters in touch-based user interfaces.

### Background

One category of handwriting recognition methods is based on recognizing individual characters before mapping the recognized characters onto words using a dictionary. Typically, these methods require a segmentation of handwritten input into segments (each segment corresponding to a character or a part of a character) and a classification of each segment or a group of segments. An example of such methods is described in U.S. Patent 9,875,254. In this example, the handwriting input is segmented into a plurality of segments wherein each segment may correspond to portions of actual characters of the handwriting input. A character hypothesis is therefore associated with one or more character candidates. A character candidate, associated with a character hypothesis, is a set that includes a given character and an estimate of the probability that the character hypothesis is the given character. This estimate of the probability may be obtained using a character classifier. The character classifier may be based on a multilayer perceptron (MLP) approach. MLP-based neural networks are known in the art.

For the purpose of presentation only, and not limitation, the MLP approach is briefly described herein. The MLP approach is based on an architecture that comprises three or more layers (an input and an output layer with one or more hidden layers) of nonlinearly-activating nodes. Since MLPs are fully connected, each node in one layer connects with a certain weight to every other node in the following layer. Learning or training occurs in the MLP by changing connection weights after each input is processed, based on the amount of error in the output compared to the expected result. This is an example of supervised learning, and is carried out through back-propagation.

Another, more recent, category of handwriting recognition method operates by directly recognizing a sequence of characters or words from the full sequence of ink points corresponding to the user input.

An example of this category of methods is a handwriting recognition approach based on a neural network-based sequence classifier with a connectionist temporal classification (CTC) output layer (hereinafter the "CTC approach"). The neural network-based sequence classifier may be a Recurrent Neural Network (RNN), a Convolutional Neural Network (CNN), or a Transformer encoder, for example. The RNN may have a standard RNN architecture or a particular RNN architecture, such as a Long Short-Term Memory (LSTM) or a Gated Recurrent Unit (GRU) RNN architecture. For the purpose of presentation, the CTC approach is briefly described herein. However, a detailed description of the CTC approach can be found in "Graves et al., 'A Novel Connectionist System for Unconstrained Handwriting Recognition', IEEE Transactions on Pattern Analysis and Machine Intelligence, 2009" (hereinafter Graves).

As mentioned above, the handwriting input includes data that represents a user input applied onto a touch-based user interface. Generally, the data comprises a sequence of ink points localized in a rectangular coordinate space (defined based on a screen of the touch-based user interface) with each ink point being associated with (X,Y) coordinates in the rectangular coordinate space. Therefore, each ink point is defined by a position (X,Y) and an associated timestamp (t).

The sequence of ink points is applied to a neural network-based sequence classifier with a CTC output layer. The CTC output layer generates a set of probabilities, for each character of a pre-defined alphabet (corresponding to the language of the handwriting input) and also for a "blank" character ("_"), the set of probabilities corresponding to the respective probabilities of observing the character (or the blank character) at each ink point of the sequence of ink points.

The output of the CTC output layer includes, at each ink point, a probability distribution function that provides, for each symbol (including the blank character), the probability of observing the character at the ink point.

EP3910534A1 discloses a method for recognizing handwritten text. The method comprises receiving data comprising a sequence of ink points; applying the received data to a neural network-based sequence classifier trained with a Connectionist Temporal Classification (CTC) output layer using forced alignment to generate an output; generating a character hypothesis as a portion of the sequence of ink points; applying the character hypothesis to a character classifier to obtain a first probability corresponding to the probability that the character hypothesis includes the given character; processing the output of the CTC output layer to determine a second probability corresponding to the probability that the given character is observed within the character hypothesis; and combining the first probability and the second probability to obtain a combined probability corresponding to the probability that the character hypothesis includes the given character.

### Summary of the invention

The recognition of complex characters, such as characters of logographic writing systems, for example writing systems of the Asian languages (for instance the Chinese, the Japanese or the Korean language), represents an extra difficulty for the use of the CTC approach. Indeed, writing systems such as those of the logographic type include high numbers of different characters, for example in the order of 30.000 characters in the Chinese language, 10.000 characters in the Japanese language and 15.000 characters in the Korean language.

The neural network-based sequence classifier used in a CTC approach encodes each character of writing systems to be recognized as a specific neuron of the output layer, preceded by a full 2-dimensional weight matrix of size proportional to the number of outputs. The time required to recognize a character is proportional, in part, to the size of the weight matrix. When the output layer encodes tens of thousands of characters, most of the processing time is spent forwarding the signal through this single large weight matrix to the output layer. The CTC approach is thus limited in terms of performance due to the time and resources necessary to process complex characters such as those of logographic writing systems.

Additionally, the digital ink representing characters of a logographic system is more complex than the ink representing alphabetically coded languages such as Latin characters. Indeed, the ink path of a character of a logographic system is on average much "denser" than the ink representing a Latin character, that is, more points are needed to draw a logographic character than a Latin character. A character input is captured as a sequence of ink points by an input sampling technique and according to, for example, a temporal frequency characterized by a fixed duration between consecutive timestamps. In fact, an ink point sequence of a Chinese character includes, on average, more than twice as many ink points compared with a sequence of ink point of a Latin character. This requires more time for a neural network-based sequence classifier to process the input signal point by point.

Lastly, the neural network-based sequence classifier in the CTC approach aims at recognizing the sequence of characters from the sequence of digital ink points representing a whole text line without prior character segmentation knowledge. Therefore, it requires training with the CTC algorithm, to automatically learn an implicit alignment between the sequence of ink points of the input layer and the sequence of characters of the output layer. The CTC forward-backward algorithm processing time is proportional to the size of the output layer and the number of output states, that is, the number of ink points.

The recognition of a logographic writing system, or other complex writing systems, by a neural network-based sequence classifier trained with CTC output layer requires substantial processing time and power resources, making it extremely challenging to achieve real-time recognition, neither on powerful servers, nor on handheld devices.

The examples of the present invention that are described herein below provide computing devices, methods and corresponding computer programs for recognizing a sequence of characters of a pre-defined writing system of a user handwritten input applied onto a touch-based user interface.

According to a first aspect, the invention provides a method of recognizing a sequence of characters of a user handwritten input, comprising:
- retrieving data representing the user handwritten input according to a pre-defined writing system, said user handwritten input comprising a sequence of ink points of the characters in a rectangular coordinate space;
- identifying at least two consecutive ink segments comprising respective subsets of the sequence of ink points and at least one cutting point at an edge of each ink segment;
- generating a sequence of ink point feature vectors based respectively on the sequence of ink points;
- applying the sequence of ink point feature vectors as inputs to a recurrent neural network-based, RNN, sequence classifier;
- filtering outputs of the RNN sequence classifier by:
   o receiving at least a timestamp of the at least one cutting point;
   o transferring only the outputs of the sequence RNN classifier corresponding to the at least one cutting point, using the timestamp as filtering criteria, to a connectionist temporal classification, CTC, output layer; and processing the filtered outputs into the CTC output layer to determine first probabilities of each character of the pre-defined writing system occurring at each consecutive cutting point. According to a particular embodiment, the pre-defined writing system is a logographic writing system.

According to a particular embodiment, the retrieving of the data representing the user handwritten input comprises receiving said data onto a touch based user interface. According to a particular embodiment, the retrieving of the data comprises a sampling step and a pre-processing step including normalizing the handwriting input, re-sampling and smoothing of the ink points.

According to a particular embodiment, the RNN classifier is trained with a dataset comprising a plurality of handwritten sequences of characters labelled according to the pre-defined writing system.

According to a particular embodiment, in response to the identifying of the at least one cutting point, the method further comprises determining segment sets representing possible character by: grouping the at least two segments based on analysis of spatial arrangements; updating the at least one identified cutting point by determining at least one cutting point of the grouped segment sets.

According to a particular embodiment, the at least one updated cutting point corresponds to an actual boundary of a character.

According to a particular embodiment, the generating of the sequence of ink point feature vectors comprises for each ink point feature vector calculating local geometric features of the respective ink point.

According to a particular embodiment, the RNN classifier is implemented as a recurrent Bidirectional Long Short-Term Memory, BLSTM.

According to a particular embodiment, the RNN classifier is trained with a dataset comprising a plurality of handwritten sequences of characters labelled according to the pre-defined writing system.

According to a particular embodiment, the filtering of the outputs of the RNN classifier comprises blocking the outputs of the RNN classifier which do not correspond to the filtering criteria.

In a particular embodiment of the invention, the various steps of the method according to the first aspect of the invention are specified by computer program instructions.

Accordingly, the invention according to a second aspect also provides a computer program on a recording medium, this computer program being arranged to be implemented by one or more processors or by a computer, this computer program comprising instructions adapted for the implementation of a method according to the first aspect of the invention.

The computer programs of the invention can be expressed in any programming language, and can be in the form of source code, object code, or any intermediary code between source code and object code, such that in a partially-compiled form, for instance, or in any other appropriate form.

The invention according to a third aspect also provides a recording medium readable by one or more processors or by a computer, this recording medium comprising computer program instructions as mentioned above.

The recording medium previously mentioned can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

The recording medium of the invention can correspond to a transmittable medium, such as an electrical or an optical signal, which can be conveyed via an electric or an optic cable, or by radio or any other appropriate means. The computer program according to the invention can in particular be downloaded from the Internet or a network of the like.

Alternatively, the recording medium can correspond to an integrated circuit in which a computer program is loaded, the circuit being adapted to execute or to be used in the execution of the methods of the invention.

According to a fourth aspect, the present invention also relates to a corresponding computing device to recognize a sequence of characters of the pre-defined writing system in user handwritten input applied onto a touch-based user interface, comprising: an input surface 4 configured to receive data representing the user handwritten input comprising a sequence of ink points in a rectangular coordinate space; an ink cutter configured to identify at least one cutting point within the sequence of ink points coupled with a segment determination module configured to determine ink segments comprising respective subsets of the sequence of ink points; a recurrent neural network-based (RNN) classifier coupled to the ink cutter and trained to determine probabilities that characters of a pre-defined writing system are observed at each consecutive cutting point, wherein the RNN classifier comprises: a sampling layer configured to filter inputs to the CTC output layer coupled with: an output blocking module configured to block outputs of the RNN classifier; an output transferring module configured to transfer to the CTC output layer the outputs corresponding to the at least one respective cutting point; and the connectionist temporal classification (CTC) output layer configured to calculate probabilities of each character of the pre-defined writing system occurring at each consecutive cutting point.

According to a particular embodiment, the ink cutter is further coupled with: a segment grouping module configured to group the at least two segments based on analysis of spatial arrangements; a cutting point updating module configured to update the at least one identified cutting point by determining at least one cutting point of the grouped segment sets.

The various embodiments defined above in connection with the method according to the first aspect of the present invention apply in an analogous manner to the computing device of the second aspect, as well as the computer program and the non-transitory computer readable medium of the present disclosure.

For each step of the method of the present invention as defined in the present disclosure, the computing device may comprise a corresponding module configured to perform said step, and vice versa.

### Brief description of the drawings

The present system and method will be more fully understood from the following detailed description of the examples thereof, taken together with the drawings. In the drawings like reference numerals depict like elements. In the drawings:
FIG. 1 shows a block diagram of a computing device in accordance with an embodiment of the present invention;
FIG. 2 shows a flow diagram of an example of the present method in accordance with an embodiment of the present invention;
FIG. 3 shows a block diagram of a system for handwriting recognition in accordance with an embodiment of the present invention;
FIG. 4 shows a block diagram of a combined system for handwriting recognition in accordance with an embodiment of the present invention;
FIG. 5 shows a block diagram illustrating an example of the handwriting recognition system of FIG. 3 in accordance with an embodiment of the present invention.

### Detailed description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The use of the term "text" in the present description is understood as encompassing all characters (e.g. alphanumeric characters or the like), and strings thereof, in any written language and any symbols used in written text.

The term "non-text" in the present description is understood as encompassing freeform handwritten or hand-drawn content (e.g. shapes, drawings, etc.) and image data. Non-text content defines graphic or geometric formations in linear or non-linear configurations, including containers, drawings, common shapes (e.g. arrows, blocks, etc.) or the like.

The terms "hand-drawing" and "handwriting" are used interchangeably herein to define the creating of digital contents by users through use of their hands (or fingers) or an input device (hand-held stylus or digital pen, mouse...) on or with an input surface 4. The term "hand" or the like is used herein to provide concise description of the input techniques, however the use of other parts of a user's body for similar input is included in this definition, such as foot, mouth and eye.

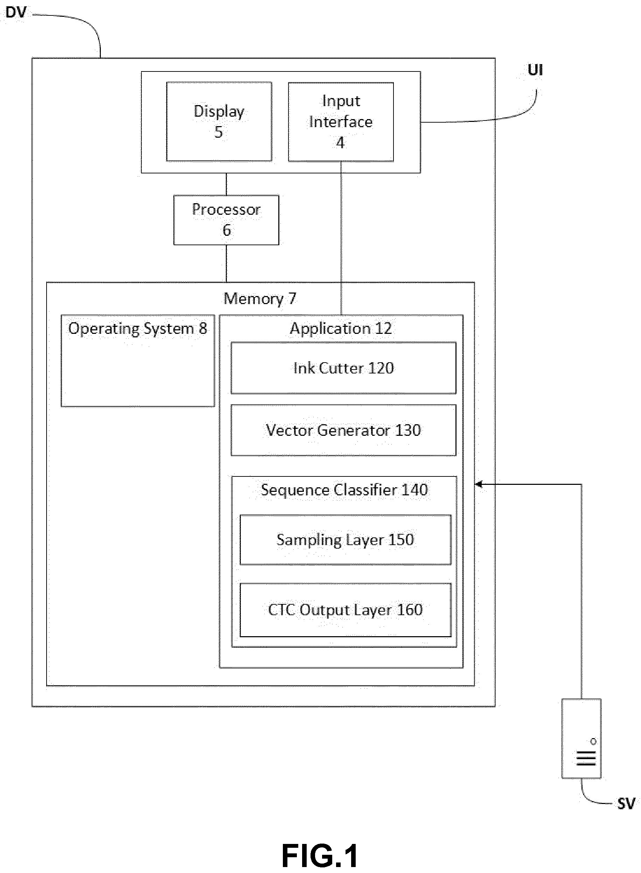

The various technologies described herein generally relate to capture, processing and management of hand-drawn or handwritten content on portable and non-portable computing devices, referenced hereinafter as DV, depicted in figure 1. The systems and methods described herein may utilize recognition of user's natural writing and drawing styles input to a computing device via an input surface 4, such as a touch sensitive screen (as discussed later).

The computing device (or digital device) DV may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or the like. The computing device DV includes components of at least one processing elements, some form of memory and input and output (I/O) devices. The components communicate with each other through inputs and outputs, such as connectors, lines, buses, links networks, or others known to the skilled person.

The computing device DV has at least one display 5 for outputting data from the computing device such as images, text, and video. The display 5 may use LCD, plasma, LED, OLED, CRT, or any other appropriate technology that is or is not touch sensitive as known to those of ordinary skill in the art. At least part of the display is co-located with at least one input area. The input area may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input area may be bounded by a permanent or video-generated border that clearly identifies its boundaries. Instead of, or additional to, an on-board display, the computing device DV may have a projected display capability.

The computing device DV also includes a processor 6, which is a hardware device for executing software, particularly software stored in memory 7. The processor 6 can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 7 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 7 may incorporate electronic, magnetic, optical, and/or other types of storage media. The memory can have a distributed architecture where various components are situated remote from one another but can also be accessed by the processor. Further, the memory 7 may be remote from the device, such as at a server or cloud-based system, which is remotely accessible by the computing device DV. The memory 7 is coupled to the processor 6, so the processor can read information from and write information to the memory 7. In the alternative, the memory 7 may be integral to the processor 6. In another example, the processor 6 and the memory 7 may both reside in a single ASIC or other integrated circuit.

The software in the memory includes an operating system 8 and an application 12 in the form of a non- transitory computer readable medium having a computer readable program code embodied therein. The operating system 8 controls the execution of the application 12. The operating system 8 may be any proprietary operating system or a commercially or freely available operating system, such as WEBOS, WINDOWS^{®}, MAC and IPHONE OS^{®}, LINUX, and ANDROID. It is understood that other operating systems may also be utilized. Alternatively, the application of the present system and method may be provided without use of an operating system.

The application 12 (or computer program) includes one or more processing elements related to detection, management and treatment of user input (discussed in detail later). The software may also include one or more other applications related to handwriting recognition (HWR), different functions, or both. Some examples of other applications include a text editor, telephone dialer, contacts directory, instant messaging facility, computer-aided design (CAD) program, email program, word processing program, web browser, and camera.

The application 12, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

Strokes entered on or via the input surface or touch based user interface 4 are processed by the processor as digital ink. A user may enter a stroke with a finger or some instrument such as a pen or stylus suitable for use with the input surface 4. The user may also enter a stroke by making a gesture above the input surface 4 if technology that senses motions in the vicinity of the input surface 4 is being used, or with a peripheral device of the computing device, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the HWR system accommodates a variety of ways in which each object may be entered whilst being recognized as the correct or intended object.

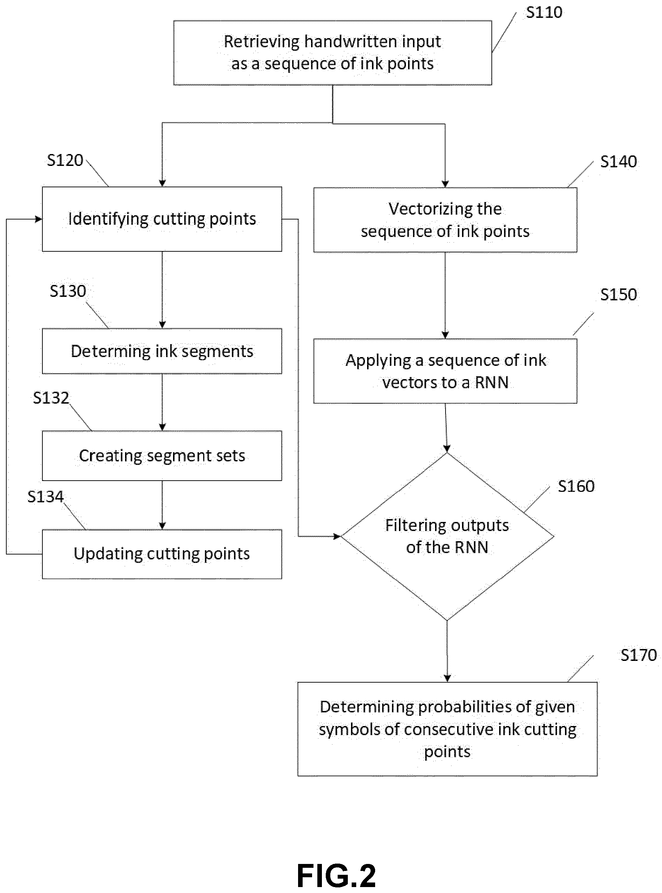

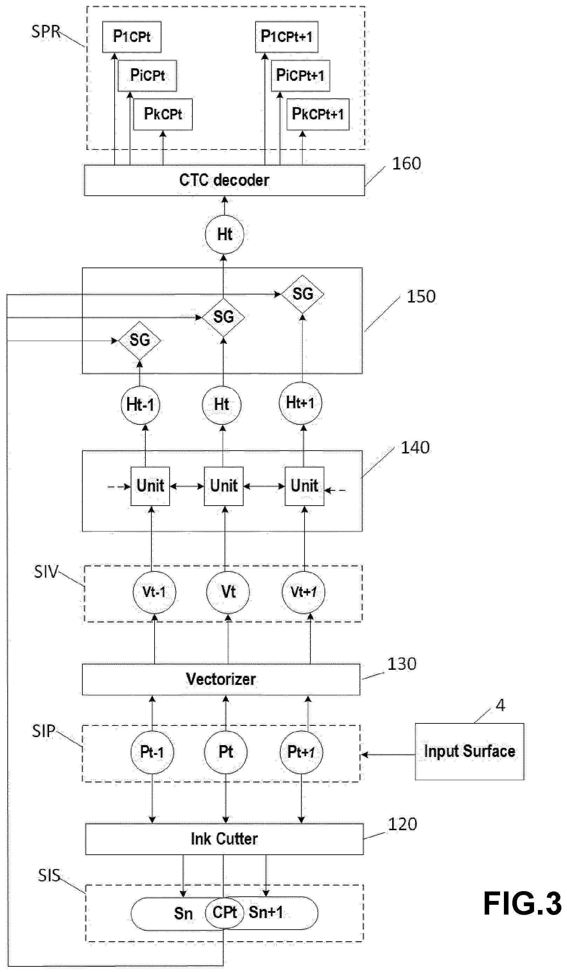

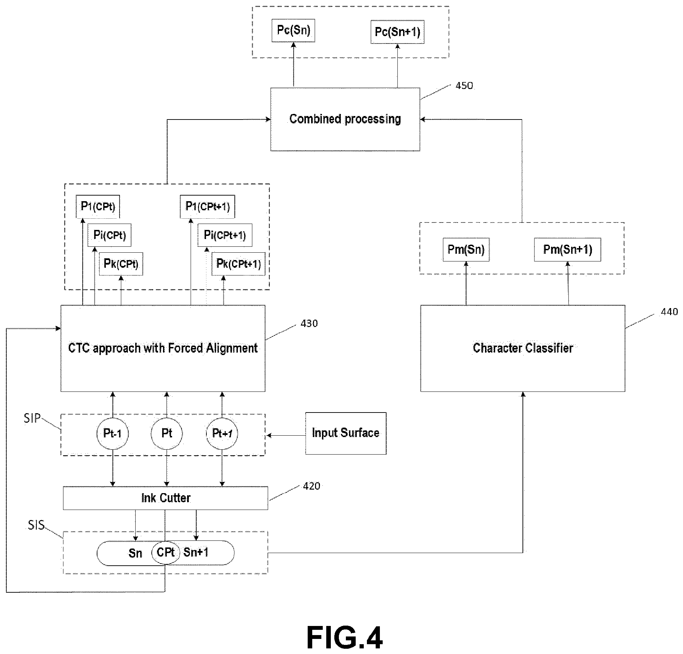

In accordance with a particular embodiment of the present invention, a method for recognizing a sequence of characters of a user handwritten input applied onto a touch-based user interface, implemented by the computing device DV, is now described with reference to Figure 2. More specifically, the computing device implements this method by executing the application stored in the memory 7. Particular embodiments of the computing device DV will be later described with reference to Figures 3 and 4.

In a retrieving step S110, the computing device DV receives (or obtains) data representing the user handwritten input as a sequence of ink points SIP in a rectangular coordinate space associated with a respective sequence of time points (figures 2-3). The user handwritten input may be individual characters, words or lines of text, or any combination thereof.

In step S110, the computing DV may obtain the data representative of the user handwritten input in any appropriate manner, either by retrieving it from an external source, by detecting it by means of the input surface 4 (possibly as a result of some processing), or by retrieving it from a local memory, for instance.

According to a particular embodiment, the received data corresponds to data generated by the touch-based user interface 4 and associated circuitry in response to capture of the stroke applied by the user. Different touch-based user interfaces may capture the stroke differently, including using different input sampling techniques, different data representation techniques, etc. In an embodiment, where the data received from the touch-based user interface 4 is of a different format than the ink point format used by the present invention, the received data is converted such as to generate a plurality of ink points and a respective plurality of timestamps therefrom.

According to a particular embodiment, as part of the retrieving step S110, the computing device DV may perform a sampling of the data representative of the user handwritten input and a pre-processing step based on the sampled data. This preprocessing may comprise normalizing the handwriting input, re-sampling and smoothing of the ink points. The normalization renders the handwriting input invariable and independent of the initial writing style and of the input device. For example, the applied pre-processing may be as described in the paragraphs at column 11, lines 14-22 of U.S. Patent 9,875,254, which paragraphs are incorporated herein by reference in their entirety. Alternatively or additionally, the applied pre-processing may be as described in Section II.A of Graves.

In an ink cutting step S120, the computing device DV identifies at least one cutting point CPt (figure 2) within the sequence of ink points. Each cutting point CPt may be characterized by a cutting ink point associated with a cutting time point. The one or more cutting points CPt divide (or delimit) the sequence of ink points into a plurality of ink segments, wherein each ink segment comprises (or is formed by) a respective subset of the sequence of ink points.

The computing device DV identifies at least two consecutive ink segments comprising respective subsets of the sequence of ink points which may serve as a basis for forming assumptions of characters on ink segments or combinations of the ink segments thus determined. In order to carry out this step for cutting or segmenting the ink data on which the recognition is performed, several types of criteria can be used by the computing device DV for identifying at least one cutting point at an edge of each ink segment, wherein the edge of an identified ink segment is most probably associated with an edge of a character intended by the user. As a non-limiting and illustrative example, any one or any combination of the following criteria can be used for the purpose of the cutting step S120:
- determination of extremum and minimum in the handwriting, relative to a vertical axis;
- detection of points of strong curvature or points of inflection in the characters or sets of handwritten characters;
- detection of an increasing slope-start;
- detection of a decreasing slope-start;
- detection of a stopping point due to a heightening of the writing means;
- detection of an affixation point for the writing means;
- detection of intersection(s).

In response to this cutting operation S120, in a segment set determination step S130, the computing device DV may combine ink segments, defined according to the cutting points, into sets of segments. In other words, at least two ink segments are identified in the sequence of ink points based on the at least one cutting point determined in cutting step S120. The determined ink segments may form sets of ink segments.

The determined segment sets may correspond to possible character segmentation delimiting a hypothesis of a character intended by the user as further explained below.

An ink segment may correspond to a complete stroke or to only part of a stroke.

According to a particular embodiment, the segment set determination step S130 comprises a segment set creation S132 and an updated cutting point re-identification S134.

In the segment set creation step S132, ink segments deducted from the identification of the at least one cutting point are grouped based on analysis of spatial arrangements.

In one example, when one ink segment corresponds to a complete stroke, neighboring ink segments may be detected.

In another example, the deducted ink segments may be grouped by detecting overlapping couples of ink segments.

In another example, the segment set creation may be performed by applying features of the ink segments corresponding to complete strokes as input vector to a neural network clustering algorithm. The features of a current stroke including contextual features with a first preceding stroke and a second preceding stroke are calculated. As a non-limiting and illustrative example, any one or any combination of following features may be used as input vector for determining the ink segment sets:
- a current stroke center;
- a current stroke width and a current stroke height;
- widths of groups formed by the current stroke and the first or the second preceding strokes;
- distances between a center of the current stroke and centers of the first or the second preceding stroke centers; a distance between a last point of the current stroke and a first point of the preceding stroke;
- coordinates of a geometric center of the group formed by the current stroke and the first or the second preceding stroke; and
- a bounding box of the current stroke may be used to determine at least one feature of the current stroke. The bounding box is defined by a vertical distance y between the top and bottom horizontal sides of the bounding box and by a horizontal distance x between the left and right vertical sides of the bounding box.

According to a particular embodiment, in an updated cutting point determination S134, the computing device DV may determine updated cutting points of the created segment sets. For example, the updated cutting points may be based on analysis of standard deviation of spatial distances within the grouped ink segments.

In parallel to the steps S120-S130 (figure 2), the sequence of ink points received in S110 is processed for handwriting recognition in steps S140-S150, as further described below. The steps S140-S150 may be performed before, simultaneously to, or after steps 120-S130.

In a vectorizing step S140, the computing device DV generates a sequence of feature vectors (also called ink point feature vectors) based respectively on the sequence of ink points. Each feature vector comprises (or define) ink point features of a respective ink point of the sequence of ink points. The ink point features defined by the feature vectors may include local geometric features, for example, geometric relationships between the (current) ink point in the segment and any other ink point of the segment, which relationships may be represented by the absolute distance "ds" between the current ink point and the previous ink point in the segment; the projections "dx" and "dy" on the X and Y axes respectively of the distance "ds"; and a measure of the curvature at the current ink point, represented by the values cos θ, sin θ, and θ, where θ is the angle formed between the line connecting the previous ink point to the current ink point and the line connecting the current ink point to the next ink point.

In a recognition step S150, the computing device DV applies the sequence of feature vectors based on the sequence of ink points to a neural network-based sequence classifier with a CTC (connectionist temporal classification) output layer. In other words, the neural network-based sequence classifier uses as input the sequence of feature vectors to produce outputs for the CTC layer, as described further below.

The neural network-based sequence classifier may be a RNN, a CNN, or a Transformer encoder, for example. The RNN may have a standard RNN architecture or a particular RNN architecture, such as a Long Short-Term Memory (LSTM) or a Gated Recurrent Unit (GRU) RNN architecture. Recurrent neural networks (RNNs) are a connectionist model containing self-connected hidden layers. One benefit of the recurrent connection is that a 'memory' of previous inputs remains in the network's internal state, allowing it to make use of past context, thereby allowing higher performances of the handwriting recognition.

The neural network-based sequence classifier may be implemented as a recurrent Bidirectional Long Short-Term Memory (BLSTM). The use of a recurrent BLSTM neural network means that the network includes memory blocks which enable it to learn long-term dependencies and to remember information over time. This type of network permits the sequence classifier to handle a sequence of vectors (an entire stroke) and to account for the temporal dependencies between successive sub-strokes (i.e., to remember the details of the path of the stroke).

In a filtering step S160 (figure 2), the computing device DV filters the outputs of the neural network-based sequence classifier (e.g., the RNN) using the timestamp of the at least one cutting point obtained in S120 as filtering criteria, to reduce the number of inputs to the CTC output layer. In other words, a reduced number of inputs to the CTC output layer is determined by filtering the outputs of the neural network-based sequence classifier based on the timestamp of the at least one cutting point as filtering criteria. This means that the computing device DV applies a filtering to the outputs of the neural network-based sequence classifier (e.g., the RNN) and further transfers, as input, to the CTC output layer only the outputs of the classifier corresponding to the applied filtering criteria, i.e. only the outputs of the classifier corresponding to the at least one cutting point (or to the timestamp of said cutting point).

The filtering criteria used in S160 may be sent by the ink cutter (used in S120) as a timestamp of the at least one cutting point. Therefore, the computing device DV may receive (or detect) a filtering criteria corresponding to the timestamp of the at least one cutting point. The filter S160 of the neural network-based sequence classifier outputs is then performed using the timestamp of the at least one cutting point as filtering criteria. Only the outputs of the neural network-based sequence classifier corresponding to the filtering criteria are transferred to the CTC output layer. As a result, at least one output signal generated by the at least one cutting point timestamp input by be transferred as input to the CTC output layer.

The filtering step allows to significantly reduce the number of outputs transferred to the CTC output layer compared to the number of input points, thereby saving processing time and resources.

Contrary to a conventional CTC approach, not all signals of the sequence of ink points are applied to CTC output layer, but only the signals corresponding to the one or more cutting points determined in S120.

The filtering step S150 lowers both the processing time and power resources required for training the system 100 and for processing handwritten recognition of logographic writings.

In a determining step S160, the computing device DV determines probabilities that given characters of the writing system are observed for each transferred outputs therefore at each consecutive cutting point. The computing device DV processes the filtered outputs through a CTC output layer as further explained below.

As a result, the CTC output layer may generate a set of probabilities, for each character (or a number of characters) of a pre-defined writing system (corresponding to the language of the handwriting input), the set of probabilities corresponding to the respective probabilities of observing the character (or possibly a blank character) at each ink point, of the sequence of ink points, corresponding to the one or more cutting points determined in S120 (instead of generating probabilities for all the ink points).

The output of the CTC output layer may thus include, at each ink point corresponding to a cutting point determined in S120, a probability distribution function that provides, for a number of symbols of the writing system, the probability of observing the character at the ink point.

The present system and method improve recognition accuracy by simplifying a mapping step of the determined probabilities over the sequence of recognized characters. Indeed from the output of the CTC output layer, probabilities of observing different sequences of characters can be computed. First, conditional probabilities corresponding to different paths (including characters and/or blanks) being observed are calculated; and then, the paths are mapped to corresponding sequences of characters as further describe in the European patent application N°3610534.

The mapping step between a recognized character inferred from the set of probabilities at each ink point and a sequence of ink points may be required due to the CTC output layer classification process. However, the present system and method result in a sequence of recognized characters inferred from the set of probabilities at each cutting point which already represents the sequence of recognized characters.

According to a particular embodiment depicted in figure 1, when running the applications stored in the memory, for each step of the method of the present invention, the computing device DV may comprise a corresponding module configured to perform said step, namely: an input surface 4, an ink cutter 120, a vector generator 130, a neural network-based sequence classifier 140 coupled with a sampling layer 150 and a CTC output layer 160.

The above description of each step of the method represented in figure 2 may apply in an analogous manner to each corresponding module of the computing device DV as shown in figure 1 and further described in figure 3.

The input surface 4 is configured to receive (or obtain) data representing the user handwritten input comprising the sequence SIP of ink points (Pₜ₋₁, Pt, Pₜ₊₁). The sequence of ink points SIP is provided to the ink cutter 120.

The ink cutter 120 is configured to determine at least one cutting point CPt and a plurality of ink segments (Sₙ, Sₙ₊₁) within the sequence of ink points. The one or more cutting points CPt divide (or delimit) the sequence of ink points into a plurality of ink segments, wherein each ink segment comprises (or is formed by) a respective subset of the sequence of ink points.

The ink cutter 120 may further determine the sets of ink segments which may combine strokes composing characters hypothesis of a writing system (e.g. a logographic system) and detect possible inter-character segmentation boundaries from the handwritten input text.

The vector generating module 130 is configured to generate a sequence of feature vectors (Vₜ₋₁, Vt, Vₜ₊₁) based respectively on the sequence of ink points (Pₜ₋₁, Pₜ, Pₜ₊₁). The sequence of feature vectors is applied to a neural network-based classifier 140, for instance a recurrent neural network-based classifier (RNN), with a connectionist temporal classification output layer 160.

The neural network-based sequence classifier 140 is coupled with a sampling layer 150 configured to filter outputs of the RNN (Hₜ₋₁, Ht, Hₜ₊₁). The sampling layer 150 is connected after a final hidden layer of the RNN 140 and before the CTC output layer 160.

The sampling layer 150 is configured to propagate a signal through logical switch gates SG to the CTC output layer 160 (namely, a CTC decoder). Therefore, the CTC output layer 160 receives the signal only at particular ink points corresponding to the cutting points CPt to leverage information processed by the ink cutter.

The CTC output layer 160 is configured to generate a set of probabilities, for each character (P₁, Pᵢ, Pₖ) of a pre-defined writing system (corresponding to the language of the handwriting input), the set of probabilities corresponding to the respective probabilities of observing the character at each cutting point P₁(CPₜ), Pᵢ (CPt), Pₖ(CPₜ).

Typically, the CTC output layer 160 is configured such that a blank character is observed at almost all processed points (i.e., probability of ~1.0 for the blank character and negligible or zero probability for all characters) and that, at only a few ink points, probability peaks (i.e., non-negligible probabilities) corresponding to actual characters are observed. In a standard CTC output layer, the peak locations are not controlled. In other words, a probability peak that is observed for a given character does not occur until the neural network-based sequence classifier has processed enough of the time series of ink points to recognize that the character appears in the handwritten input. Thus, the probability peak for a given character may or may not occur at an ink point that belongs to the approximate ink range of the character in the handwritten input.

However, by filtering the outputs (Ht-1, Ht, Ht+1) from the neural network 140 to only process the output Ht corresponding to the signal of the cutting point outputs, the present system and method computes a sequence of probable characters corresponding to the handwriting input determined as the sequence with the highest conditional probability. The recognized character is being aligned along a cutting point sequence.

From the output of the CTC output layer 160, probabilities of observing different sequences of characters can be computed. First, conditional probabilities corresponding to different paths (including characters and/or blanks) being observed may be calculated; and then, the paths may be mapped to corresponding sequences of characters.

The neural network-based classifier 140 (for instance of the recurrent type), with the sampling layer 150 and the CTC output layer 160, is trained to determine probabilities that given characters of a pre-defined writing system are observed at each consecutive cutting point. The RNN classifier 140 may be trained with a dataset of samples of ink of a pre-defined writing system comprising a plurality of labelled ink sequences. The skilled person may train the RNN classifier in any suitable manner to implement the present invention.

According to a particular embodiment illustrated in Figure 4, the plurality of ink segments (Sₙ, Sₙ₊₁) considered each as character hypothesis may be applied to a character classifier 440 to obtain character probabilities (Pₘ(Sₙ), Pₘ(Sₙ₊₁)) corresponding to the probabilities that each character hypothesis includes given characters associated with the character hypothesis. The character classifier 440 may be based on a multilayer perceptron (MLP) process. Thus, the MLP processing may be combined with the CTC approach trained with forced alignment 430 as further explained below, a combined processing 450 configured to calculate combined probabilities (P_{c}(Sₙ), P_{c}(Sₙ₊₁)) corresponding to the probability that the character hypothesis includes the given character.

In an embodiment, the combined processing 450 combines the resulting character probability Pₘ of the character classifier 440 (referred to as a first probability) and the probability distribution Pᵢ of the CTC approach 430 (referred to as a second probability) to obtain the combined probability P_{c} . The combined processing 450 comprises calculating a weighted combination of the first probability and the second probability. The character probabilities (Pₘ(Sₙ), Pₘ(Sₙ₊₁)) of the character classifier 440 may be processed with the probability distribution (P₁(CPₜ), Pᵢ (CPt), Pₖ(CPₜ)) of of the CTC approach 430, wherein the CTC approach 430 includes a neural network-based classifier trained with a CTC output layer using forced alignment to generate an output. Indeed, the neural network-based sequence classifier is therefore trained with a CTC output layer using the result of a forced alignment process. The forced alignment process may result from the process performed by the character classifier 440. The forced alignment training of the neural network-based sequence classifier causes a peak probability among the probability distribution of observing the given character to occur within the one or more respective segments associated with the given character. This allows for readily extracting the peak probability for the given character from the output of the CTC output layer as further described in European patent application N°3910534.

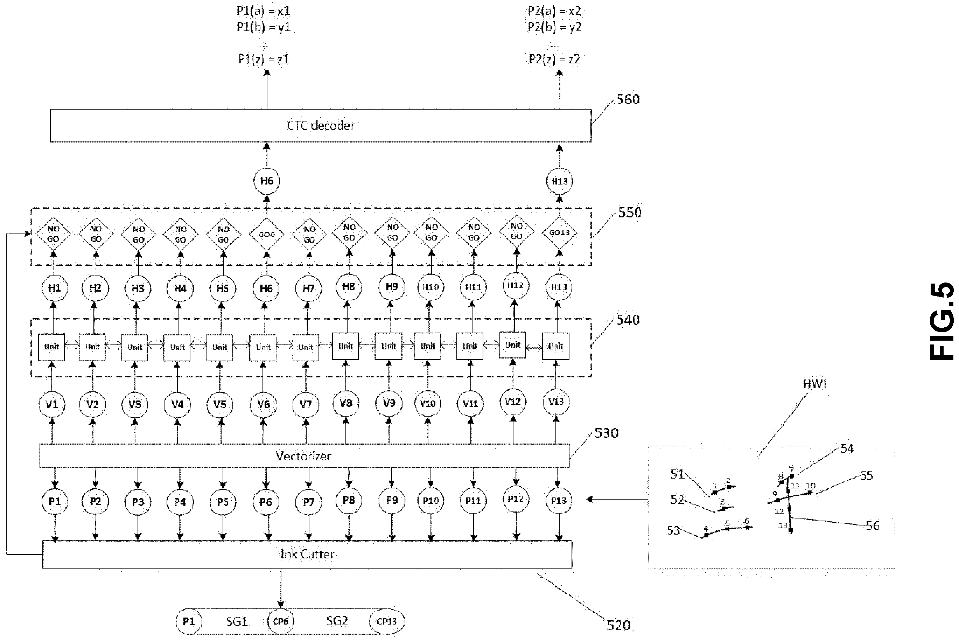

For the purpose of illustration, Figure 5 shows an example of the recognition of a handwriting input according to a particular embodiment of the present system and method.

The handwriting input HWI, shown as six input strokes (51 - 56) of digital ink received on an input surface, represents two kanji characters (" 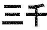 ") of the Japanese language composing the word "tree thousand".

The handwriting input HWI is captured as a plurality of ink points numbered from 1 to 13 onto the handwritten digital ink. The number of ink points may be sampled according to a temporal frequency, the subsequent segmentation of the plurality of ink points based on temporal information (i.e., into equal duration segments) corresponds to splitting the strokes into a plurality of segments (or ink segments) having an equal number of ink points over an equal time span (with same durations but potentially with different lengths). The ink points 1- 13 shown on Figure 3 are positioned arbitrarily along the digital ink for illustration purposes only.

The sequence of ink point P1 - P13 corresponds to a sequence of coordinates in a rectangular coordinate space associated with respective time points.

The ink cutter 520 processes the sequence of ink points P1 - P13 to identify one or several cutting points, for instance two cutting points CP6 and CP13 in the present example.

First, the ink cutter 520 defines a first set of ink cutting points based on a set of points of interests within each input stroke, for example points considered as relevant for segmentation are extrema points (for example, the point 1 of the first stroke or the point 7 of the fourth stroke), crossing points (for example point 11), points in particular spatial arrangements, for example, flat sections refer to ink portions having a low slope. The ink cutter 520 determines a plurality of ink segments delimited by the first set of cutting points. Next, the ink cutter 520 generates sets of the ink segments by combining neighboring segments of each ink segment. For example, the first, second and third strokes 51, 52 and 53 are combined within a first set of segments SG1 and the fourth, fifth and sixth strokes 54, 55 and 56 are combined within a second set of segments SG2. A second set of ink cutting points is therefore updated by considering the sets of segments SG1 and SG2 delimited by the ink point P6 and P13 which are therefore defined as cutting points CP6 and CP13 of the handwritten input. The updated cutting points may correspond to the actual boundaries of the kanji characters. Indeed, as shown on the handwriting input HWI, the last ink point of the first character 'Ξ' is the ink point 6 which may be defined as a right boundary of the first character and the last ink point of the second character ' 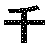 ' is the ink point 13 which may be defined as a right boundary of the second character. Therefore, the cutting points CP6 and CP13 may correspond to the right boundaries of the first and second characters.

In parallel processing steps, the sequence of ink points P1-P13 is sent to a vector generator 330 which calculates ink point features. A sequence of feature vectors V1-V13 includes features of the respective ink point of the sequence of ink points P1-P13.

Further, a neural network-based sequence classifier 540 represented by connected units (Unit), for example LSTM connected units, processes the sequence of feature vectors V1-V13. In the illustrated example, the neural network 540 comprises thirteen units wherein each feature vector of the sequence of vectors is input to a respective unit. Other configurations of the neural network 540 are however possible. The neural network 540 calculates outputs H1 to H13 of the thirteen units. Each output H1 to H13 corresponding to a respective feature vector V1 to V13 associated to a respective ink point P1 to P13.

Then, a sampling layer 550 processes the outputs H1 to H13 of neural network 540 according to filtering criteria transferred by the ink cutter 520. The sampling layer receives as filtering criteria the occurrence of the cutting points CP6 and CP13 generated by the ink cutter 520 as explained above. Therefore, the sampling layer 550 comprises switch gates represented as Go or No-Go switches for further processing signal corresponding to the cutting points information input to the neural network. The sampling layer 550 is therefore testing whether an output H1 to H13 matches a signal resulting from processing the ink points corresponding to the cutting points. Therefore, the sampling layer 550 is transferring the outputs H6 and H13 through go switches and is blocking the outputs H1 to H5 and H7 to H12 through no-go switches, for further processing to the CTC output layer 560.

The CTC output layer 560 processes the filtered outputs H6 and H17 transferred by the sampling layer. The output of the CTC output layer computes for each filtered cutting point signal a probability distribution. The probability distribution function provides, for each character of the kanji writing system (including the blank character), the probabilities of observing the characters P1(a), P1(b), ..., P1(z) and P2(a), P2(b), ... P2(z) at each cutting point respectively. Probabilities of observing different sequences of characters is computed from the output of the CTC output layer.

While not explicitly described, the above-described embodiments of the present disclosure may be employed in any combination or sub-combination thereof.

## Claims

1. **A method** of recognizing a sequence of characters of a user handwritten input, comprising:
- retrieving (S110) data representing the user handwritten input according to a pre-defined writing system, said user handwritten input comprising a sequence of ink points (Pt) of the characters in a rectangular coordinate space;
- identifying (S120) at least two consecutive ink segments (Sn) comprising respective subsets of the sequence of ink points and at least one cutting point (CPt) at an edge of each ink segment;
- generating (S140) a sequence of ink point feature vectors (Vt) based respectively on the sequence of ink points;
- applying (S150) the sequence of ink point feature vectors as inputs to a recurrent neural network-based, RNN, sequence classifier;
- filtering (S160) outputs (Ht) of the RNN sequence classifier by:
o receiving at least a timestamp of the at least one cutting point;
o transferring only the outputs of the sequence RNN classifier corresponding to the at least one cutting point, using the timestamp as filtering criteria, to a connectionist temporal classification, CTC, output layer; and
- processing (S170) the filtered outputs into the CTC output layer to determine first probabilities of each character of the pre-defined writing system occurring at each consecutive cutting point.

2. A method of claim 1 wherein the pre-defined writing system is a logographic writing system.

3. A method of claim 1 or 2 wherein the retrieving of the data representing the user handwritten input comprises receiving said data onto a touch based user interface.

4. A method of any one of claims 1 to 3 wherein the retrieving of the data comprises a sampling step and a pre-processing step including normalizing the handwriting input, re-sampling and smoothing of the ink points.

5. A method of any one of claims 1 to 4 wherein the RNN classifier is trained with a dataset comprising a plurality of handwritten sequences of characters, the handwritten sequences being labelled according to the pre-defined writing system.

6. A method of any one of claims 1 to 5 wherein, in response to the identifying of the at least one cutting point, the method further comprises determining segment sets representing possible character by:
- grouping the at least two ink segments based on analysis of spatial arrangements; and
- updating the at least one identified cutting point by determining at least one cutting point of the grouped segment sets.

7. A method of claim 6 wherein the at least one updated cutting point corresponds to an actual boundary of a character of the sequence of characters.

8. A method of any one of claims 1 to 7 wherein the generating of the sequence of ink point feature vectors comprises, for each ink point feature vector, calculating local geometric features of the respective ink point.

9. A method of any one of claims 1 to 8 wherein the RNN classifier is implemented as a recurrent Bidirectional Long Short-Term Memory, BLSTM.

10. A method of any one of claims 1 to 9 wherein the filtering of the outputs of the RNN classifier comprises blocking the outputs of the RNN classifier which do not correspond to the filtering criteria.

11. A method of any one of claims 1 to 10 wherein said processing the filtered outputs into the CTC output layer comprises:
outputting, at each ink point corresponding to a cutting point, a probability distribution function that provides, for a number of symbols of the writing system, the first probability of observing the character at said ink point.

12. A method of any one of claims 1 to 11 wherein said processing the filtered outputs into the CTC output layer comprises:
- applying said at least two consecutive ink segments (Sn) to a character classifier (440), each ink segment corresponding to character hypothesis, thereby obtaining character probabilities (Pm(Sn), Pm(Sn+1)) that each character hypothesis includes given characters associated with the character hypothesis; and
wherein said method comprises a combined processing comprising:
- obtaining combined probabilities (Pc(Sn), Pc(Sn+1)) that each character hypothesis includes said given characters by combining said first probabilities (Pi) outputted by the CTC output layer and the character probabilities (Pm(Sn), Pm(Sn+1)) outputted by the character classifier.

13. A method of claim 12 wherein the character classifier (440) is based on a multilayer perceptron (MLP) process.

14. A computing device (DV) configured to recognize a sequence of characters, comprising:
- an input surface (4) configured to receive data input according to a pre-defined writing system, said user handwritten input representing the user handwritten input comprising a sequence of ink points of the characters in a rectangular coordinate space;
- an ink cutter (120) configured to identify at least one cutting point within the sequence of ink points coupled with
o a segment determination module configured to determine ink segments comprising respective subsets of the sequence of ink points;
- a recurrent neural network-based, RNN, sequence classifier (140) coupled to the ink cutter and trained to determine probabilities that characters of a pre-defined writing system are observed at each consecutive cutting point, the RNN classifier comprising:
- a sampling layer (150) configured to filter inputs to the CTC output layer (160) coupled with:
▪ an output blocking module configured to block outputs of the RNN classifier;
▪ an output transferring module configured to transfer, to the CTC output layer, only the outputs corresponding to the at least one respective cutting point; and
- the connectionist temporal classification (CTC) output layer (160) coupled to the output transferring module and configured to calculate first probabilities of each character of the pre-defined writing system occurring at each consecutive cutting point.

15. A computing device of claim 14 wherein the ink cutter is further coupled with:
- a segment grouping module configured to group the at least two segments based on analysis of spatial arrangements; and
- a cutting point updating module configured to update the at least one identified cutting point by determining at least one cutting point of the grouped segment sets.

## Patentansprüche

1. Verfahren zum Erkennen einer Abfolge von Zeichen einer handschriftlichen Eingabe eines Benutzers, umfassend:
- Abrufen (S110) von Daten, die die handschriftliche Eingabe des Benutzers nach einem vordefinierten Schreibsystem darstellen, wobei die handschriftliche Eingabe des Benutzers eine Abfolge von Tintenpunkten (Pt) der Zeichen in einem rechteckigen Koordinatenraum umfasst;
- Identifizieren (S120) von mindestens zwei aufeinanderfolgenden Tintensegmenten (Sn), die entsprechende Untergruppen der Abfolge von Tintenpunkten und mindestens einen Schnittpunkt (CPt) an einer Kante jedes Tintensegments umfassen;
- Erzeugen (S140) einer Abfolge von Tintenpunkt-Merkmalsvektoren (Vt) basierend jeweils auf der Abfolge von Tintenpunkten;
- Anwenden (S150) der Abfolge von Tintenpunkt-Merkmalsvektoren als Eingaben für einen wiederkehrenden neuronalen Netzwerk-basierten Abfolgenklassifikator (RNN);
- Filtern (S160) der Ausgaben (Ht) des RNN-Abfolgenklassifikator nach:
o Empfangen mindestens eines Zeitstempels des mindestens einen Schnittpunktes;
o Übertragen nur der dem mindestens einen Schnittpunkt entsprechenden Ausgaben des Abfolge-RNN-Klassifikators unter Verwendung des Zeitstempels als Filterkriterium an eine verbindungsorientierte zeitliche Klassifizierungs-, CTC- ,Ausgabeschicht; und
- Verarbeiten (S170) der gefilterten Ausgaben in die CTC-Ausgabeschicht zum Bestimmen erster Wahrscheinlichkeiten jedes an jedem aufeinanderfolgenden Schnittpunkt auftretenden Zeichens des vordefinierten Schreibsystems.

2. Verfahren nach Anspruch 1, wobei das vordefinierte Schreibsystem ein logografisches Schreibsystem ist.

3. Verfahren nach Anspruch 1 oder 2, wobei das Abrufen der Daten, die die handschriftliche Eingabe des Benutzers darstellen, den Empfang der Daten auf einer berührungsbasierten Benutzeroberfläche umfasst.

4. Verfahren nach einem der Ansprüche 1 bis 3, wobei das Abrufen der Daten einen Abtastschritt und einen Vorverarbeitungsschritt umfasst, einschließlich der Normalisierung der Handschrifteingabe, des erneuten Abtastens und des Glättens der Tintenpunkte.

5. Verfahren nach einem der Ansprüche 1 bis 4, wobei der RNN-Klassifikator mit einem Datensatz trainiert wird, der eine Vielzahl von handgeschriebenen Abfolgen von Zeichen umfasst, wobei die handgeschriebenen Abfolgen von Zeichen nach dem vordefinierten Schreibsystem beschriftet sind.

6. Verfahren nach einem der Ansprüche 1 bis 5, wobei das Verfahren als Reaktion auf das Identifizieren des mindestens einen Schnittpunkts weiter das Bestimmen von Segmentsätzen umfasst, die ein mögliches Zeichen darstellen, durch:
- Gruppieren der mindestens zwei Tintensegmente basierend auf der Analyse von räumlichen Anordnungen; und
- Aktualisieren des mindestens einen identifizierten Schnittpunkts durch Bestimmen von mindestens einem Schnittpunkt der gruppierten Segmentsätze.

7. Verfahren nach Anspruch 6, wobei der mindestens eine aktualisierte Schnittpunkt einer tatsächlichen Begrenzung eines Zeichens der Zeichenabfolge entspricht.

8. Verfahren nach einem der Ansprüche 1 bis 7, wobei das Erzeugen der Sequenz von Tintenpunkt-Merkmalsvektoren für jeden Tintenpunkt-Merkmalsvektor das Berechnen lokaler geometrischer Merkmale des jeweiligen Tintenpunkts umfasst.

9. Verfahren nach einem der Ansprüche 1 bis 8, wobei der RNN-Klassifikator als wiederkehrender bidirektionaler Langzeit-Kurzzeitspeicher, BLSTM, implementiert ist.

10. Verfahren nach einem der Ansprüche 1 bis 9, wobei das Filtern der Ausgaben des RNN-Klassifikators das Blockieren der Ausgaben des RNN-Klassifikators umfasst, die nicht den Filterkriterien entsprechen.

11. Verfahren nach einem der Ansprüche 1 bis 10, wobei das Verarbeiten der gefilterten Ausgaben in die CTC-Ausgabeschicht Folgendes umfasst:
Ausgeben einer Wahrscheinlichkeitsverteilungsfunktion an jedem Tintenpunkt, der einem Schnittpunkt entspricht, die für eine Anzahl von Symbolen des Schreibsystems die erste Wahrscheinlichkeit bereitstellt, das Zeichen an dem Tintenpunkt zu beobachten.

12. Verfahren nach einem der Ansprüche 1 bis 11, wobei das Verarbeiten der gefilterten Ausgaben in die CTC-Ausgabeschicht Folgendes umfasst:
- Anwenden der mindestens zwei aufeinanderfolgenden Tintensegmente (Sn) auf einen Zeichenklassifikator (440), wobei jedes Tintensegment einer Zeichenhypothese entspricht, wodurch Zeichenwahrscheinlichkeiten (Pm(Sn), Pm(Sn+1)) erhalten werden, dass jede Zeichenhypothese gegebene Zeichen einschließt, die mit der Zeichenhypothese verbunden sind; und
wobei das Verfahren eine kombinierte Verarbeitung umfasst, die Folgendes umfasst:
- Erhalten kombinierter Wahrscheinlichkeiten (Pc(Sn), Pc(Sn+1)), dass jede Zeichenhypothese die gegebenen Zeichen einschließt, indem die ersten Wahrscheinlichkeiten (Pi), die von der CTC-Ausgabeschicht ausgegeben werden, und die vom Zeichenklassifikator ausgegebenen Zeichenwahrscheinlichkeiten (Pm(Sn), Pm(Sn+1)) kombiniert werden.

13. Verfahren nach Anspruch 12, wobei der Zeichenklassifikator (440) auf einem mehrschichtigen Perceptron-Verfahren (MLP) basiert.

14. Rechenvorrichtung (DV), die so ausgebildet ist, dass sie eine Zeichenabfolge erkennt, umfassend:
- eine Eingabefläche (4), die so ausgebildet ist, dass sie Dateneingabe nach einem vordefinierten Schreibsystem empfängt, wobei die handschriftliche Eingabe des Benutzers die handschriftliche Eingabe des Benutzers darstellt, die eine Abfolge von Tintenpunkten der Zeichen in einem rechteckigen Koordinatenraum umfasst;
- einen Tintenschneider (120), der so ausgebildet ist, dass er mindestens einen Schnittpunkt innerhalb der Abfolge von Tintenpunkten identifiziert, gekoppelt mit
o einem Segmentbestimmungsmodul, das so ausgebildet ist, dass es Tintensegmente bestimmt, die jeweilige Teilmengen der Abfolge von Tintenpunkten umfassen;
- einen wiederkehrenden neuronalen Netzwerk-basierten, RNN- ,Abfolgenklassifizikator (140), der mit dem Tintenschneider gekoppelt und trainiert ist, um Wahrscheinlichkeiten zu bestimmen, dass Zeichen eines vordefinierten Schreibsystems an jedem aufeinanderfolgenden Schnittpunkt beobachtet werden, wobei der RNN-Klassifikator Folgendes umfasst:
- eine Abtastschicht (150), die so ausgebildet ist, dass sie Eingänge zur CTC-Ausgabeschicht (160) filtert, gekoppelt mit Folgendem:
▪ einem Ausgabesperrmodul, das so ausgebildet ist, dass es Ausgaben des RNN-Klassifikators sperrt;
▪ einem Ausgabeübertragungsmodul, das so ausgebildet ist, dass es nur die Ausgaben, die dem mindestens einen jeweiligen Schnittpunkt entsprechen, an die CTC-Ausgabeschicht überträgt; und
- der mit dem Ausgabeübertragungsmodul gekoppelten und so ausgebildeten verbindungsorientierten zeitlichen Klassifizierungs-, (CTC)-,Ausgabeschicht (160), dass sie erste Wahrscheinlichkeiten jedes an jedem aufeinanderfolgenden Schnittpunkt auftretenden Zeichens des vordefinierten Schreibsystems berechnet.

15. Rechenvorrichtung nach Anspruch 14, wobei der Tintenschneider weiter mit Folgendem gekoppelt ist:
- einem Segmentgruppierungsmodul, das so ausgebildet ist, dass es die mindestens zwei Segmente basierend auf der Analyse von räumlichen Anordnungen gruppiert; und
- einem Schnittpunkt-Aktualisierungsmodul, das so ausgebildet ist, dass es den mindestens einen identifizierten Schnittpunkt aktualisiert, indem es mindestens einen Schnittpunkt der gruppierten Segmentsätze bestimmt.

## Revendications

1. Procédé de reconnaissance d'une séquence de caractères d'une saisie manuscrite d'un utilisateur, comprenant :
- récupération (S110) de données représentant la saisie manuscrite de l'utilisateur selon un système d'écriture prédéfini, ladite saisie manuscrite de l'utilisateur comprenant une séquence de points d'encre (Pt) des caractères dans un espace de coordonnées rectangulaires ;
- identification (S120) d'au moins deux segments d'encre consécutifs (Sn) comprenant des sous-ensembles respectifs de la séquence de points d'encre et d'au moins un point de coupure (CPt) au niveau d'un bord de chaque segment d'encre ;
- génération (S140) d'une séquence de vecteurs de caractéristiques de points d'encre (Vt) basés respectivement sur la séquence de points d'encre ;
- application (S150) de la séquence de vecteurs de caractéristiques de points d'encre en tant qu'entrées à un classificateur de séquences basé sur un réseau neuronal récurrent (RNN) ;
- filtrage (S160) des sorties (Ht) du classificateur de séquences RNN en :
o réception d'au moins un horodatage dudit au moins un point de coupure ;
o transfert uniquement des sorties du classificateur de séquences RNN correspondant audit au moins un point de coupure, en utilisant l'horodatage comme critère de filtrage, vers une couche de sortie de classification temporelle connexionniste (CTC) ; et
- traitement (S170) des sorties filtrées dans la couche de sortie CTC afin de déterminer les premières probabilités d'apparition de chaque caractère du système d'écriture prédéfini à chaque point de coupure consécutif.

2. Procédé selon la revendication 1, dans lequel le système d'écriture prédéfini est un système d'écriture logographique.

3. Procédé selon la revendication 1 ou 2, dans lequel la récupération des données représentant la saisie manuscrite de l'utilisateur comprend la réception desdites données sur une interface utilisateur tactile.

4. Procédé selon l'une quelconque des revendications 1 à 3, dans lequel la récupération des données comprend une étape d'échantillonnage et une étape de prétraitement incluant la normalisation de l'entrée manuscrite, le rééchantillonnage et le lissage des points d'encre.

5. Procédé selon l'une quelconque des revendications 1 à 4, dans lequel le classificateur RNN est entraîné à l'aide d'un ensemble de données comprenant une pluralité de séquences de caractères manuscrites, les séquences manuscrites étant étiquetées selon le système d'écriture prédéfini.

6. Procédé selon l'une quelconque des revendications 1 à 5, dans lequel, en réponse à l'identification dudit au moins un point de coupure, le procédé comprend en outre la détermination d'ensembles de segments représentant un caractère possible en :
- regroupant les au moins deux segments d'encre sur la base d'une analyse des dispositions spatiales ; et
- mettant à jour ledit au moins un point de coupure identifié en déterminant au moins un point de coupure des ensembles de segments groupés.

7. Procédé selon la revendication 6, dans lequel ledit au moins un point de coupure mis à jour correspond à une limite réelle d'un caractère de la séquence de caractères.

8. Procédé selon l'une quelconque des revendications 1 à 7, dans lequel la génération de la séquence de vecteurs de caractéristiques de points d'encre comprend, pour chaque vecteur de caractéristiques de point d'encre, le calcul des caractéristiques géométriques locales du point d'encre respectif.

9. Procédé selon l'une quelconque des revendications 1 à 8, dans lequel le classificateur RNN est mis en œuvre sous la forme d'un réseau récurrent à mémoire à court et long terme bidirectionnel (BLSTM).

10. Procédé selon l'une quelconque des revendications 1 à 9, dans lequel le filtrage des sorties du classificateur RNN comprend le blocage des sorties du classificateur RNN qui ne correspondent pas aux critères de filtrage.

11. Procédé selon l'une quelconque des revendications 1 à 10, dans lequel ledit traitement des sorties filtrées dans la couche de sortie CTC comprend :
la production, à chaque point d'encre correspondant à un point de coupure, d'une fonction de distribution de probabilité qui fournit, pour un certain nombre de symboles du système d'écriture, la première probabilité d'observer le caractère audit point d'encre.

12. Procédé selon l'une quelconque des revendications 1 à 11, dans lequel ledit traitement des sorties filtrées dans la couche de sortie CTC comprend :
- l'application desdits au moins deux segments d'encre consécutifs (Sn) à un classificateur de caractères (440), chaque segment d'encre correspondant à une hypothèse de caractère, obtenant ainsi des probabilités de caractères (Pm(Sn), Pm(Sn+1)) selon lesquelles chaque hypothèse de caractère comprend des caractères donnés associés à l'hypothèse de caractère ; et
dans lequel ledit procédé comprend un traitement combiné comprenant :
- l'obtention de probabilités combinées (Pc(Sn), Pc(Sn+1)) indiquant que chaque hypothèse de caractère comprend lesdits caractères donnés, en combinant lesdites premières probabilités (Pi) fournies par la couche de sortie CTC et les probabilités de caractères (Pm(Sn), Pm(Sn+1)) fournies par le classificateur de caractères.

13. Procédé selon la revendication 12, dans lequel le classificateur de caractères (440) est basé sur un processus de perceptron multicouche (MLP).

14. Dispositif informatique (DV) configuré pour reconnaître une séquence de caractères, comprenant :
- une surface d'entrée (4) configurée pour recevoir une entrée de données selon un système d'écriture prédéfini, ladite entrée manuscrite de l'utilisateur représentant l'entrée manuscrite de l'utilisateur comprenant une séquence de points d'encre des caractères dans un espace de coordonnées rectangulaires ;
- un découpeur d'encre (120) configuré pour identifier au moins un point de coupure au sein de la séquence de points d'encre, couplé à
o un module de détermination de segments configuré pour déterminer des segments d'encre comprenant des sous-ensembles respectifs de la séquence de points d'encre ;
- un classificateur de séquences (140) basé sur un réseau neuronal récurrent (RNN), couplé au découpeur d'encre et entraîné pour déterminer les probabilités que des caractères d'un système d'écriture prédéfini soient observés à chaque point de coupure consécutif, le classificateur RNN comprenant :
- une couche d'échantillonnage (150) configurée pour filtrer les entrées vers la couche de sortie CTC (160), couplée à :
▪ un module de blocage de sortie configuré pour bloquer les sorties du classificateur RNN ;
▪ un module de transfert de sortie configuré pour transférer, vers la couche de sortie CTC, uniquement les sorties correspondant audit au moins un point de coupure respectif ; et
- la couche de sortie de classification temporelle connexionniste (CTC) (160), reliée au module de transfert de sortie et configurée pour calculer des premières probabilités que chaque caractère du système d'écriture prédéfini apparaisse à chaque point de coupure consécutif.

15. Dispositif informatique selon la revendication 14, dans lequel le découpeur d'encre est en outre couplé à :
- un module de regroupement de segments configuré pour regrouper les au moins deux segments sur la base d'une analyse des dispositions spatiales ; et
- un module de mise à jour des points de coupure configuré pour mettre à jour ledit au moins un point de coupure identifié en déterminant au moins un point de coupure des ensembles de segments groupés.
